# EUROPEAN PATENT SPECIFICATION

(11) **EP 0 603 896 B1**
(45) Date of publication and mention of the grant of the patent: **31.03.1999**
(21) Application number: 93120820.1
(22) Date of filing: 23.12.1993
(51) Int. Cl.: B29C 70/02, B30B 1/00

(54) **Low power consumption method for the production of components made from composite material**
Verfahren zur Herstellung von Teilen aus Verbundmaterial
Méthode pour la fabrication de composants à base de matériau composite

(30) Priority: 23.12.1992 IT TO921035
(43) Date of publication of application: 29.06.1994
(73) Proprietor: FIAT AUTO S.p.A., 10135 Torino (IT)
(72) Inventor: Da Re', Mario, I-10100 Torino (IT)
(74) Representative: Plebani, Rinaldo

(56) References cited:
- EP-A- 0 428 885
- WO-A-89/04789
- DE-A- 1 704 442
- GB-A- 585 870
- GB-A- 2 065 022

## Description

The present invention relates to a low power consumption method for the production of components of composite material, in particular carbon fibre bodywork components for motor vehicles.

It is known that composite materials, in particular those based on carbon fibre (widely used in the motor industry as they have a mechanical strength comparable to that of sheet steel of the same thickness), as well as those based on aramide or glass fibre, are commercially available in the form of sheets formed by a mat or fabric of fibre embedded in a polymer matrix, usually of an epoxy type; these sheets may be of the "pre-impregnated" type in the form of flexible rolls which may be unwound and cut, or of the "laminated" type in the form of rigid sheets.

Components made from composite material are normally obtained by placing these sheets (previously softened in an oven if in a laminated form) in the die of a mould having a shape matching that of the component to be obtained and on which a layer of separating agent has previously been disposed, placing a covering layer, generally of polyethylene, in a leak-tight manner on the mould in order to form a "pouch" within which a pump is used to produce a vacuum in order to compact the sheet of composite against the die. The vacuum pouch obtained in this way is finally sealed and placed in an autoclave in which it is brought to a temperature and pressure (generally 5 atm and 170°C) causing polymerization, with consequent hardening by reticulation of the epoxy matrix of the sheet. At the end of the polymerization stage, the autoclave is opened, the "pouch" is opened and the finished composite component, formed by the sheet hardened into the shape imparted by the die of the mould, is removed from the mould.

According to a possible alternative technique, in particular when it is necessary to produce hollow components, at least two sheets of composite are placed against the dies of respective half-moulds which are then brought together to form a closed cavity, after the interposition between the sheets of one or more cushions of silicone rubber; the assembly obtained in this way is inserted in an autoclave and heated under pressure, as in the previous case; the heating causes the thermal expansion of the silicone rubber making it possible to obtain, before the polymerization of the composite sheets is complete, the compacting of these sheets against the dies of the half-moulds in order to ensure the exact shaping of the finished composite component.

GB-A-2065022 teaches a similar method, wherein the cushions are replaced by a bladder fixed to the plant and which is fitted with a hot pressurized liquid.

It is evident that known methods for the production of components of composite material are costly in terms of energy and in terms of manufacturing time; in the first two cases the stage of heating under pressure in an autoclave is lengthy and has a very high power consumption as it is necessary to heat the entire inner volume of the autoclave and its contents including the moulds; as the components to be produced are generally of relatively large dimensions (for instance bonnets, mudguards, etc.) it is necessary to use large moulds which consequently have a high thermal inertia and to use autoclaves of equally large dimensions which are therefore costly and bulky; handling operations to move the moulds to and from the autoclave are also complicated by the relatively large dimensions of these moulds. The manufacturing time needed in the first case is in practice double that of the second case as it is also necessary to carry out a preliminary operating cycle to prepare the "pouch" and compact the composite sheet under vacuum, which operation, as it is carried out by a vacuum pump, entails further power consumption to actuate the pump and makes it necessary, at the planning stage, to increase the size of the production line by including an appropriate station.

Finally, EP-A-0428885 overcomes these drawbacks, but requires to incorporate alien material in the component to be produced, increasing its weight.

The object of the invention is to provide a method for the production of components of composite material, in particular vehicle bodywork components of carbon fibre, in a rapid manner, with a reduced size from the plant engineering point of view and, in particular, with a low power consumption.

The invention relates to a low power consumption method for the production of components of composite material from composite sheets formed by fibres embedded in a matrix which can be polymerized, comprising the stages recited in claim 1.

The invention is set out in further detail in the following non-limiting description of two embodiments thereof, made with reference to the accompanying drawings, in which:
Fig. 1 shows the method of the invention applied to the production of a plane component;
Fig. 2 shows the method of the invention applied to the production of a more complex component.

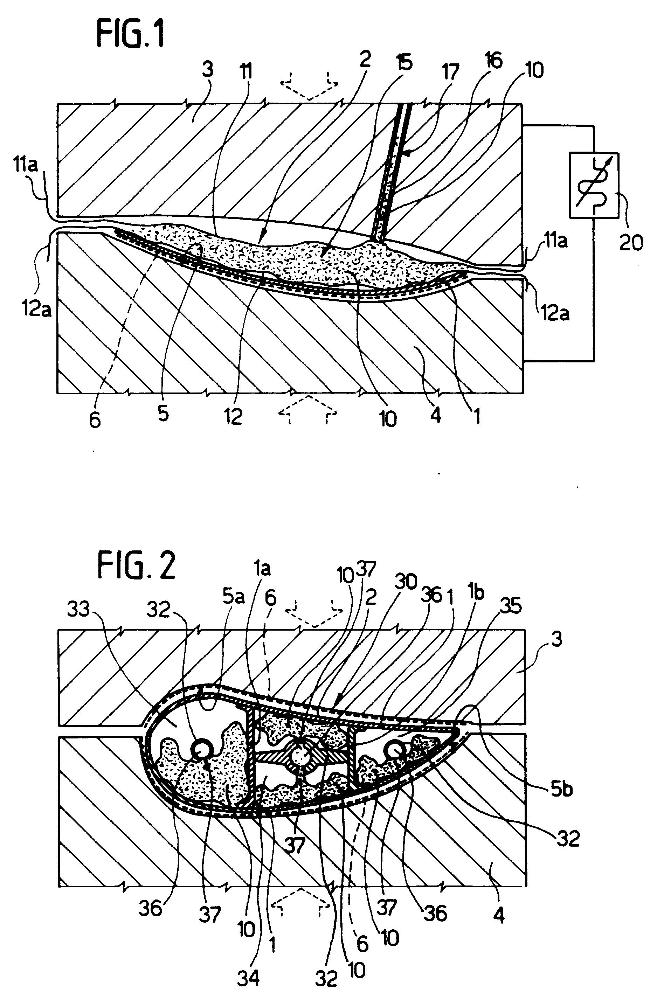

With reference to Fig. 1, the method of the invention is adapted to produce components of composite material, in particular vehicle bodywork components made from carbon fibre, from one or more composite sheets 1 of known type, formed by fibres (of carbon, glass, aramide, etc.) disposed to form a fabric or mat and embedded, in a known manner which is not illustrated for purposes of simplicity, in a matrix of material which can be polymerized, for instance epoxy resin, which is not shown for purposes of simplicity.

According to the invention, the method of the invention comprises two basic stages: during a first stage, a sheet 1, for instance of the pre-impregnated type and therefore soft and plastically flexible at ambient temperature, previously cut to measure, on the basis of the shape of the component to be produced, from a roll (not shown), is disposed in a closed moulding cavity 2 formed between at least two adjacent half-moulds 3, 4 (if the shape of the component to be produced has undercuts, the half-moulds 3, 4 may be made in a plurality of pieces or as modular half-moulds). The sheet 1 is disposed in direct contact with at least one of the half-moulds 3, 4, in this case in contact with the surface of a die 5 of the half-mould 4 having a shape matching that of the component to be obtained and, in order to prevent accidental adhesion to this surface and subsequently to facilitate the removal of the finished component from the half-mould 4, a layer 6 of a separating agent of any known type is disposed, in a known manner, on the surface of the die 5 of the half-mould 4 before the sheet 1 is disposed on the half-mould 4.

The half-moulds 3 and 4 are then brought together to form the cavity 2 and, during a second stage of the method of the invention, a fluid material 10 is introduced into the cavity 2 and is adapted to exert, within this cavity 2, a pressure able to compact the composite sheet 1 against the die 5 in order exactly to reproduce its shape and, simultaneously, to transmit a quantity of thermal energy to the composite sheet 1 such as to bring the epoxy matrix of the sheet to its polymerisation temperature. This causes the matrix of the sheet 1 to start to polymerize with consequent three-dimensional reticulation and hardening of the matrix: consequently, the sheet 1, once it has been sufficiently hardened and shaped in accordance with the profile of the die 5, forms the composite component of the desired shape and, after opening of the cavity 5 by separation of the half-moulds 3, 4, the finished component may be removed from the die 5.

As shown in Fig. 1, the fluid material 10 is introduced into a zone of the cavity 2 bounded between two covering sheets 11, 12 preferably made from a polyolefin, for instance polyethylene or polypropylene, disposed in the moulding cavity 2 in order to isolate in a fluid-tight manner, from the fluid material 10, both the composite sheet 1 in contact with the die 5 (the sheet 12) and the upper half-mould 3 (the sheet 11). The sheets 11 and 12 are, for instance, disposed in succession above the whole of the sheet 1 immediately after the latter has been placed on the half-mould 4 and are then locked in the cavity 2 by superimposing the half-mould 3 so as to grip in a superimposed manner the respective perimetral edges 11a and 12a of the sheets 11, 12 between the perimetral edges of the half-moulds 3, 4.

The dimensions of the sheets 11, 12 are selected so that they can copy the inner profile of the half-moulds 3, 4 when pressed against these and therefore define within the cavity 2 a pouch or bladder 15 whose volume is substantially equivalent to that of the cavity 2 and whose interior defines the zone into which the material 10 is introduced. The bladder 15 is sealed in a fluid-tight manner by the clamping pressure exerted on its edges by the coupling of the half-moulds 3, 4 and, where necessary, may be sealed more securely, for instance by joining (by heat or ultrasonic methods) the superimposed edges 11a and 12a of the sheets 11, 12.

According to a first possible embodiment of the invention, the fluid material 10 is a pressurized liquid heated to a temperature higher than the polymerization temperature of the matrix, for instance a diathermic oil heated in a known manner to 170-180°C in an appropriate known boiler (not shown) and then supplied to fill the bladder 15 until it reaches a predetermined pressure therein, for instance 5-6 atm, by means of a known pump (not shown). In this case, the edges 11a and 12a are preferably sealed by stable connection and the oil is introduced into the pouch 15, after closure of the cavity 2, via a nozzle 16, provided for instance within the half-mould 3, which passes through the sheet 11 or which is connected to an appropriate known valve (not shown) borne rigidly thereon.

According to the preferred embodiment shown in Fig. 1, the fluid material 10 is formed by a material at the expansion stage in which an exothermic chemical reaction is in progress, in this case by a polyurethane foam at the polymerization and expansion stage (PUR), normally used for the production of expanded plastic panels, produced directly within the cavity 2 or produced in a known manner by a known plant (not shown).

In this case the chemical reaction which causes the expansion of the resin (for instance the reaction between water and part of the isocyanates forming one of the constituents of the resin) pressurizes the interior of the bladder 15 to a desired pressure value, with a resultant increase in the volume of the bladder 15 until it occupies the entire free volume of the cavity 2 and causes the compacting of the sheet 1 against the die 5 at the desired pressure (for instance 5 atm). Similarly, the chemical polymerization reaction (between isocyanates and glycols and polyols which form the other constituent of the resin), which is highly exothermic, heats the composite sheet 1 to the polymerization temperature of the matrix through the transmission of heat (by conduction or convection) from the material 10 being expanded to the sheet 1 which therefore receives the thermal energy developed within the material 10 by the exothermic reaction.

If a heated and pressurized oil (or other liquid) is used, the possible operating sequence is as follows: depositing of the sheet 1 on the half-mould 4, depositing of the two protective sheets 11 and 12, sealing of the edges 11a and 12a, superimposition of the half-mould 3 to form the cavity 2, production of the hydraulic connection between the nozzle 16 and the interior of the bladder 15 formed by the sheets 11, 12 (for instance by perforation of the upper sheet 11 by the point of the nozzle 16 when the half-mould 3 is superimposed or immediately after this by the relative translation of the nozzle 16 in a respective through seat 17 obtained through the half-mould 3), injection of the liquid 10 until it completely fills the cavity 2 at the desired pressure, opening of the half-moulds 3, 4, removal of the bladder 15 (still full of the liquid 10 and following sealing of any communication hole with the nozzle 16, or from which the liquid 10 has previously been emptied via an appropriate discharge tube (not shown)) and removal of the rigid sheet 1, shaped as the component to be produced, from the die 5.

When using a PUR foam, it is possible to use the same operating sequence as described above (apart from the possible sealing of the edges 11a and 12a which is not necessary), introducing the foam 10 (or its initial chemical constituents) into the space between the sheets 11, 12 by injection through the nozzle 16 or to produce the foam 10 separately in a known manner and not under pressure so that it can then be poured into the half-mould 4 after the sheets 1 and 12 have been disposed thereon, followed by covering with the sheet 11 and the half-mould 3 to form the cavity 2; in this case the internal pressurization of the cavity 2 is wholly obtained by means of the expansion undergone by the resin 10 at the polymerization stage after closure of the cavity 2. When expansion of the polyurethane foam 10 is complete, the half-moulds 3, 4 are separated, the foam 10, hardened to form a consistent mass which, if not solid, is at least gelatinous, contained between the two covering sheets 11, 12 is removed simply by grasping the sheets 11, 12 by their edges and removing them from the die 5 after which the composite sheet 1, forming a finished rigid component, is removed from the die 5.

When the half-moulds 3, 4 are opened, the sheet 1 may have completed polymerization or, preferably, although already forming a rigid finished component (in order to allow manual or automatic handling thereof), the polymerization of the matrix of the composite sheet 1 is still in progress and is caused to continue at ambient temperature during the storage of the component obtained or during transit to the vehicle assembly line.

If use is made of composite sheets 1 of a laminated rather than a pre-impregnated type, the sheets 1 are rigid and have to be softened beforehand by pre-heating, for instance in an oven, so that they can be disposed to copy the profile of the die 5. According to a further aspect of the invention, however, it is possible to proceed as follows: a laminated sheet 1 is inserted while still rigid between the half-moulds 3, 4, the latter being formed from aluminium so as to define respective counter-electrodes and being connected to a high frequency generator 20; after the half-moulds 3, 4 have been brought into contact and following the insertion between these and on the rigid sheet 1 of the sheets 11, 12, the softening of the laminated sheet is carried out by heating of this sheet by microwaves transmitted by the half-moulds 3, 4 following actuation of the generator 20; this process is continued until the softened sheet 1 sinks under the effect of gravity onto the die 5 of the underlying half-mould 4. The sheets 11, 12 subsequently also sink onto the die 5 and the transmission of microwaves is discontinued while the injection of the fluid 10 is commenced, as described above. During this stage of softening of the sheet 1 by the electrodes formed by the half-moulds 3, 4 and by the generator 20, it is also possible to seal the edges 11a on the edges 12a.

In Fig. 2, in which details similar or identical to those already described bear the same reference numerals, the method of the invention is also adapted to the production of complex hollow components, such as an aileron 30, formed by the connection of a plurality of sheets 1, in particular pre-impregnated sheets 1. As shown in Fig. 2, both half-moulds 3, 4 are provided with respective facing dies, 5a and 5b respectively, on the surface of each of which there is disposed a layer 6 of separating agent and whose profiles match the upper and lower profile of the aileron 30 to be obtained; a respective sheet 1 cut to size is disposed on each die 5; further sheets 1a and 1b cut differently are also disposed transversely in one of the half-moulds 3, 4 on the sheet 1 already disposed on the die 5, as shown, so as to come into contact with the other sheet 1 when the two half-moulds 3, 4 are superimposed to define the cavity 2, in order to form the inner ribs of the aileron 30, while the sheets 1 in contact with the dies 5 form the upper and lower surfaces of the aileron 30, leaving the longitudinal terminal ends of the aileron open; since the sheets 1 are not rigid, a support armature 32 is also disposed within the cavity 2, for instance in the die 5 of one of the half-moulds 3, 4.

Before the half-moulds 3, 4 are closed on one another, protection sheets are disposed therebetween, of the type of the sheets 11, 12 (not shown), formed as sleeves and inserted crosswise in the dies 5 above the respective sheets 1 in order to protect and insulate the armature 32 and to form pouches containing the armature components 32 inserted transversely in respective compartments 33, 34, 35 formed between the sheets 1a, 1b within the cavity 2. The fluid 10 is then injected into the cavity 2, in this case into each compartment 33, 34, 35, this fluid preferably being formed by a PUR foam at the expansion and polymerization stage, for instance using respective internal conduits 36 of the armature 32, provided with injection holes 37, as injection means.

The foam 10 then fills and pressurizes the entire free space of the cavity 2, filling and expanding the protection pouches disposed in the compartments 33, 34, 35: in this way, the sheets 1 are compacted against the dies 5 and the sheets 1a, 1b are compacted under the effect of the opposite hydrostatic pressures in each compartment 33, 34, 35. All the sheets 1, 1a, 1b are also heated by the foam, as described above, causing the respective matrices to polymerize leading to the connection of the sheets 1 to one another at the points of contact between these sheets and the stiffening of the three-dimensional structure defined by the sheets 1 to form the aileron 30. As soon as the sheets 1 have stiffened, the half-moulds 3, 4 may be separated and the finished aileron 30 removed, even though the matrix of the sheets 1 is still undergoing polymerization, which may be completed at ambient temperature.

By means of the protective sheets or pouches, the foam 10, which has now solidified, may be readily removed from the aileron 1 which has just been produced and eliminated, for instance by removing it transversely through one of the terminal ends of the aileron 30 which has remained open; the removal and recovery of the armature may take place similarly.

The advantages of the invention are evident from the above description: in practice, the compacting and polymerization stages of the composite sheets may be carried out simultaneously with substantial savings of production time; compacting, as it takes place hydrostatically, is also very efficient. In particular, however, the heat needed for the polymerization stage, rather than being supplied from outside the mould, is supplied directly inside the mould, with low heat dissipation, by the fluid which carries out compacting, allowing for much better regulation of the temperature of the sheets and saving a substantial quantity of thermal energy, since it is not necessary to heat the half-moulds and the entire inner volume of an autoclave to heat the composite sheets; moreover, bulky and costly equipment, such as autoclaves and vacuum pumps, are no longer necessary.

The above advantages are further improved if a PUR foam is used as the compacting/heating fluid : in fact, in this case, all the mechanical energy needed to carry out the compacting of the composite sheets and all the thermal energy needed for polymerization are provided directly within the mould by chemical methods without the use of external equipment ; and by the fact that the compacting/heating material is eliminated easily and without fouling the moulds by virtue of the arrangment of sheets 11, 12.

## Claims

1. A low power consumption method for the production of components of composite material from composite sheets (1) formed by fibres embedded in a matrix which can be polymerized, said method comprising the stages of:
(i)- disposing at least one composite sheet (1) in a closed molding cavity (2), formed between at least two adjacent half-molds (3, 4), in direct contact with at least one half-mold having a die (5) of a shape matching that of the component to be obtained; and
(ii)- subsequently introducing into a portion (15) of said molding cavity (2) a fluid material (10) adapted to exert a pressure within the cavity (2) able to compact the composite sheet (1) against the die (5) and simultaneously to transmit thermal energy to the composite sheet (1) so as to bring the matrix to its polymerization temperature;
(iii)- said portion (15) of the cavity within which said fluid material is introduced being defined between covering sheets (11, 12) which have been previously placed inside the mold cavity (2), between said composite sheets (1) and at least one of said half-molds (3,4) so as to isolate in fluid-tight manner said portion (15) from the rest of said cavity (2); and
(iv)- said fluid material (10) being a material at the expansion stage in which an exothermic chemical reaction is taking place;
**characterized by the fact that it further comprises the steps of:**
(a)- placing said covering sheets (11,12) inside the mold cavity to form said fluid tight portion (15) in such a position and manner that they are removable from the mold after that said components are formed, said sheets being made of polyolefin and being held in position by the mold;
(b)- eliminating the expanded material contained between the said covering sheets (11, 12) after that said stage of expansion of said material (10) is complete and the half-molds (3, 4) have been separated;
(c)- said elimination step being carried out simply by grasping the sheets (11, 12) at their edges (11a,12a) and removing them together with the expanded material therebetween from the mold and the composite sheet (1) now forming a finished rigid component contained in the die (5) and removable from one of the half-molds (3,4).

2. A method as claimed in claim 1, characterized in that a layer of separating agent (6) is disposed on the surface of the die (5) of the half-mold in contact with the composite sheet (1) prior to the introduction of the sheet into this half-mold.

3. A method as claimed in claim 1 or 2, characterized in that the fluid material (10) at the expansion stage is introduced by injection through at least one nozzle (16) carried by one of the half-molds (4) and passing through at leas one of the covering sheets (11,12).

4. A method as claimed in one of the preceding claims, characterized in that the fluid material (10) at the expansion stage is a polyurethane foam (PUR).

5. A method as claimed in one of the preceding claims, characterized in that the quantity and chemical nature of said material at the expansion stage introduced between said two sheets (11,12) is such as to generate within the cavity (2), at the end of the expansion stage, a pressure sufficient to compact the composite sheet (1) against the die (5) and, simultaneously, to generate within the cavity (2), due to said exothermic reaction, a quantity of heat sufficient to bring the composite sheet (1) to the polymerization temperature of the matrix.

6. A method as claimed in claim 4, characterized in that said polyurethane foam at the polymerization and expansion stage is introduced between two covering sheets (11,12), the first of which (12) is disposed in contact with the composite sheet (1) and covers a first half-mold (4), and the second of which (11) contacts and covers a second half-mold (3), the edged (11a12a) of said sheets being clamped in a fluid tight manner by said half-molds when they contact each other.

7. A method as claimed in one of the preceding claims, characterized in that the composite sheet (1), as soon as it forms a finished rigid component, is removed from the half-molds (3, 4) while the polymerization of the matrix of the composite sheet is still in progress and is caused to continue at ambient temperature.

8. A method as claimed in one of the preceding claims, characterized in that use is made of pre-impregnated composite sheets (1) which are disposed in the half-molds (3, 4) in contact with at least one die (5) of a half-mold.

9. A method as claimed in one of the preceding claims, characterized in that use is made of laminated composite sheets (1), at least one laminated sheet being inserted while still rigid between the half-molds (3, 4); the latter being provided to form respective counter-electrodes which are connected to a high frequency generator (20); the still rigid laminated sheet (1) being softened, after the half-molds (3, 4) have been brought together, by heating of this sheet by microwaves in order to cause it to sink onto the die (5) of the underlying half-mold, after which the transmission of microwaves is discontinued and a stage of injection of said material at the expansion stage (10) into the molding cavity (2) is commenced.

## Patentansprüche

1. Mit niedrigem Energieverbrauch verbundenes Verfahren zum Herstellen von Bauteilen aus einem Verbundmaterial aus dünnen Verbundmaterialbahnen (1), die aus Fasern gebildet sind, die in eine Matrix eingebettet sind, die polymerisiert werden kann, welches Verfahren die Schritte umfaßt:
(1) Anordnen von wenigstens einer dünnen Verbundmaterialbahn (1) in einem geschlossenen Formhohlraum (2), der zwischen wenigstens zwei benachbarten Halbformen (3, 4) gebildet ist, und zwar in direktem Kontakt mit wenigstens einer Halbform, die eine Matrize (5) mit einer Form aufweist, die zu der des Bauteils paßt, das zu erzielen ist,
(ii) anschließendes Einführen eines Fluidmaterials (10) in einen Teil (15) des Formhohlraums (2), das dazu geeignet ist, im Hohlraum (2) einen Druck auszuüben, der in der Lage ist, die Verbundmaterialbahn (1) gegen die Matrize (5) zu pressen, und gleichzeitig Wärmeenergie auf die Verbundmaterialbahn (1) zu übertragen, um die Matrix auf ihre Polymerisationstemperatur zu bringen,
(iii) wobei der Teil (15) des Hohlraumes, in den das Fluidmaterial eingeführt ist, zwischen zwei Deckbahnen (11, 12) begrenzt ist, die bereits vorher im Inneren des Formhohlraums (2) zwischen den Verbundmaterialbahnen (1) und wenigstens einer der Halbformen (3, 4) angeordnet wurden, um fluiddicht diesen Teil (15) vom Rest des Hohlraums (2) zu isolieren, und
(iv) das Fluidmaterial (10) ein Material in der Expansionsphase ist, in der eine exotherme chemische Reaktion abläuft, dadurch gekennzeichnet, daß es weiterhin die folgenden Schritte umfaßt:
(a) Anordnen der Deckbahnen (11, 12) im Inneren des Formhohlraums, derart, daß der fluiddichte Teil (15) an einer derartigen Stelle und in einer derartigen Weise gebildet wird, daß sie von der Form nach der Bildung der Bauteile entfernbar sind, welche Bahnen aus Polyolefinen bestehen und in ihrer Lage durch die Form gehalten werden,
(b) Entfernen des zwischen den Deckschichten (11, 12) aufgenommenen expandierten Materials, nachdem die Expansionsstufe des Materials (10) abgeschlossen ist und die Halbformen (3, 4) getrennt worden sind,
(c) wobei das Entfernen einfach dadurch ausgeführt wird, daß die Bahnen (11, 12) an ihren Rändern (11a, 12a) ergriffen und zusammen mit dem expandierten Material dazwischen von der Form entfernt werden, wobei die Verbundmaterialbahn (1) nun ein fertiges starres Bauteil bildet, das in der Matrize (5) enthalten ist und von einer der Halbformen (3, 4) entnommen werden kann.

2. Verfahren nach Anspruch 1, dadurch gekennzeichnet, daß eine Schicht eines Trennmittels (6) auf der Oberfläche der Matrize (5) der Halbform in Kontakt mit der Verbundmaterialbahn (1) vor dem Einführen der Bahn in diese Halbform angeordnet wird.

3. Verfahren nach Anspruch 1 oder 2, dadurch gekennzeichnet, daß das Fluidmaterial (10) in der Expansionsphase durch Einspritzen durch wenigstens eine Düse (16), die von einer der Halbformen (4) getragen wird und durch wenigstens eine der Deckbahnen (11, 12) führt, eingeführt wird.

4. Verfahren nach einem der vorhergehenden Ansprüche, dadurch gekennzeichnet, daß das Fluidmaterial (10) in der Expansionsphase ein Polyurethanschaum (PUR) ist.

5. Verfahren nach einem der vorhergehenden Ansprüche, dadurch gekennzeichnet, daß die Menge und die chemische Natur des Materials in der Expansionsphase, das zwischen die beiden Bahnen (11, 12) eingeführt wird, derart ist, daß im Hohlraum (2) am Ende der Expansionsphase ein Druck erzeugt wird, der ausreicht, um die Verbundmaterialbahn (1) gegen die Matrize (5) zu pressen und gleichzeitig im Hohlraum (2) aufgrund der exothermen Reaktion eine Wärmemenge zu erzeugen, die ausreicht, um die Verbundmaterialbahn (1) auf die Polymerisationstemperatur der Matrix zu bringen.

6. Verfahren nach Anspruch 4, dadurch gekennzeichnet, daß der Polyurethanschaum in der Polymerisations- und Expansionsphase zwischen zwei Deckbahnen (11, 12) eingeführt wird, von denen eine (12) in Kontakt mit der Verbundmaterialbahn (1) angeordnet ist und eine erste Halbform (4) überdeckt und die zweite (11) eine zweite Halbform (3) kontaktiert und überdeckt, wobei die Ränder (11a, 12a) der Bahnen fluiddicht durch die Halbformen eingeklemmt werden, wenn diese in Kontakt miteinander gebracht werden.

7. Verfahren nach einem der vorhergehenden Ansprüche, dadurch gekennzeichnet, daß die Verbundmaterialbahn (1) von den Halbformen (3, 4) entnommen wird, sobald sie ein fertiges starres Bauteil gebildet hat, während die Polymerisation der Matrix der Verbundmaterialbahn noch fortschreitet und bei Umgebungstemperatur fortsetzen gelassen wird.

8. Verfahren nach einem der vorhergehenden Ansprüche, dadurch gekennzeichnet, daß vorimprägnierte Verbundmaterialbahnen (1) verwandt werden, die in den Halbformen (3, 4) in Kontakt mit wenigstens einer Matrize (5) einer Halbform angeordnet werden.

9. Verfahren nach einem der vorhergehenden Ansprüche, dadurch gekennzeichnet, daß laminierte Verbundmaterialbahnen (1) verwandt werden, wobei wenigstens eine laminierte Bahn noch im starren Zustand zwischen die Halbformen (3, 4) eingegeben wird, letztere in Form von jeweiligen Gegenelektroden vorgesehen sind, die mit einem Hochfrequenzgenerator (20) verbunden werden, die noch starre laminierte Bahn (1) erwärmt wird, nachdem die Halbformen (3, 4) zusammengeführt sind, indem diese Bahn durch Mikrowellen erwärmt wird, damit sie auf die Matrize (5) der darunterliegenden Halbform absinkt, wonach die Übertragung von Mikrowellen unterbrochen wird und eine Phase des Einspritzens des Materials (10) in der Expansionsphase in den Formhohlraum (2) begonnen wird.

## Revendications

1. Procédé à basse consommation de courant pour la production de composants en matière composite à partir de feuilles de composite (1) formées par des fibres noyées dans une phase dispersée qui peut être polymérisée, ledit procédé comprenant les étapes suivantes :
(i)- dépôt d'au moins une feuille de composite (1) dans une cavité de moulage fermée (2), formée entre au moins deux demi-moules adjacents (3, 4), en contact direct avec au moins un demi-moule comportant une matrice (5) ayant une forme concordant avec celle du composant à obtenir ; et
(ii)- introduction par la suite dans une partie (15) de ladite cavité de moulage (5) d'une matière fluide (10) conçue pour exercer une pression à l'intérieur de la cavité (2) capable de tasser la feuille de composite (1) contre la matrice (5) et en même temps de transmettre une énergie thermique à la feuille de composite (1) de façon à amener la phase dispersée à sa température de polymérisation ;
(iii)- ladite partie (15) de la cavité à l'intérieur de laquelle ladite matière fluide est introduite étant définie entre des feuilles de couverture (11, 12) qui ont été précédemment placées à l'intérieur de la cavité de moulage (2), entre lesdites feuilles de composite (1) et au moins un desdits demi-moules (3, 4) de façon à isoler d'une manière étanche au fluide ladite partie (15) du reste de ladite cavité (2) ; et
(iv)- ladite matière fluide (10) étant une matière à l'étape de dilatation dans laquelle une réaction chimique exothermique a lieu ;
caractérisé en ce qu'il comprend de plus les étapes suivantes :
(a)- placement desdites feuilles de couverture (11, 12) à l'intérieur de la cavité de moulage pour former ladite partie étanche au fluide (15) dans une position de sorte qu'elles peuvent être retirées du moule après la formation desdits composants, lesdites feuilles étant faites de polyoléfine et étant maintenues en position par le moule ;
(b)- élimination de la matière dilatée contenue entre lesdites feuilles de couverture (11, 12) après l'achèvement de ladite étape de dilatation de ladite matière (10) et la séparation des demi-moules (3, 4) ;
(c)- ladite étape d'élimination étant exécutée en saisissant simplement les feuilles (11, 12) au niveau de leurs bords (11a, 12a) et en les retirant ensemble, la matière dilatée étant entre elles, du moule et la feuille de composite (1) formant maintenant un composant rigide fini contenu dans la matrice (5) et pouvant être retiré de l'un des demimoules (3, 4).

2. Procédé selon la revendication 1, caractérisé en ce qu'une couche d'agent de séparation (6) est disposée sur la surface de la matrice (5) du demi-moule en contact avec la feuille de composite (1) avant l'introduction de la feuille dans ce demi-moule.

3. Procédé selon la revendication 1 ou 2, caractérisé en ce que la matière fluide (10) à l'étape de dilatation est introduite par injection à travers au moins une buse (16) portée par l'un des demi-moules (4) et passant à travers au moins l'une des feuilles de couverture (11, 12).

4. Procédé selon l'une des revendications précédentes, caractérisé en ce que la matière fluide (10) à l'étape de dilatation est une mousse de polyuréthane (PUR).

5. Procédé selon l'une des revendications précédentes, caractérisé en ce que la quantité et la nature chimique de ladite matière à l'étape de dilatation introduite entre lesdites deux feuilles (11, 12) font en sorte de produire à l'intérieur de la cavité (2), à la fin de l'étape de dilatation, une pression suffisante pour tasser la feuille de composite (1) contre la matrice (5) et, en même temps, de produire à l'intérieur de la cavité (2), à cause de ladite réaction exothermique, une quantité de chaleur suffisante pour amener la feuille de composite (1) à la température de polymérisation de la phase dispersée.

6. Procédé selon la revendication 4, caractérisé en ce que ladite mousse de polyuréthane à l'étape de polymérisation et de dilatation est introduite entre deux feuilles de couverture (11, 12), dont la première (12) est disposée en contact avec la feuille de composite (1) et couvre un premier demi-moule (4), et dont la seconde (11) vient en contact et "recouvre un second demi-moule (3), les bords (11a, 12a) desdites feuilles étant serrés d'une manière étanche au fluide par lesdits demi-moules lorsqu'ils sont en contact l'un avec l'autre.

7. Procédé selon l'une des revendications précédentes, caractérisé en ce que la feuille de composite (1), dès qu'elle forme un composant rigide fini, est retirée des demi-moules (3, 4) tandis que la polymérisation de la phase dispersée de la feuille de composite est toujours en cours et est obligée de continuer à température ambiante.

8. Procédé selon l'une quelconque des revendications précédentes, caractérisé en ce que l'on utilise des feuilles de composite préimprégnées (1) qui sont disposées dans les demi-moules (3, 4) en contact avec au moins une matrice (5) d'un demi-moule.

9. Procédé selon l'une des revendications précédentes, caractérisé en ce que l'on utilise des feuilles de composite stratifiées (1), au moins une feuille stratifiée étant insérée tout en étant encore rigide entre les demi-moules (3, 4) ; ces derniers étant prévus pour former des contre-électrodes respectives qui sont reliées à un générateur à haute fréquence (20) ; la feuille stratifiée encore rigide (1) étant ramollie, après avoir rapproché les demi-moules (3, 4), en chauffant cette feuille par des micro-ondes afin de l'obliger à couler sur la matrice (5) du demi-moule sous-jacent, après quoi la transmission des micro-ondes est interrompue et une étape d'injection de ladite matière à l'étape de dilatation (10) dans la cavité de moulage (2) commence.
